# EUROPEAN PATENT SPECIFICATION

(11) **EP 3 412 182 B1**
(45) Date of publication and mention of the grant of the patent: **16.09.2020**
(21) Application number: 17175087.0
(22) Date of filing: 08.06.2017
(51) Int. Cl.: A47J 31/44

(54) **COFFEE MACHINE WATER TANK HANDLE AND COVER SYSTEM**
GRIFF UND ABDECKSYSTEM EINES KAFFEEMASCHINENWASSERTANKS
POIGNÉE DE RÉSERVOIR D'EAU ET SYSTÈME DE COUVERCLE DE MACHINE À CAFÉ

(43) Date of publication of application: 12.12.2018
(73) Proprietor: BSH Hausgeräte GmbH, 81739 München (DE)
(72) Inventor: Ogrizek, Bostjan, 3320 Velenje (SI); Golicnik, Matjaz, 3332 Recica (SI); Gnielka, Katja, 81371 München (DE)

(56) References cited:
- EP-A1- 2 721 975
- DE-A1- 3 112 231

## Description

The present invention relates generally but not exclusively to the field of coffee machines and more specifically to a water tank of a coffee machine equipped with a bifunctional element which movement is provided by a hinge geometry on the water tank and a cooperating sliding groove on the bifunctional element, where the bifunctional element has at least one function part for unlocking and removing said bifunctional element from the water tank.

Coffee brewing devices are known in the state of the art and are commonly used. Typically, brewing machines have a body with removable water tank for clear water, a grinder, a pump which delivers the water to the heating source and next to the brewing unit. The beverage brewing substance is infused with heated water to produce a brewed beverage which flows out the coffee machine through the coffee outlet.
Typically a coffee machine water tanks are removably mounted on the beverage preparation device for supplying water to a heat system of the device. Such water tanks usually have a cover for closing the water tank and to protect the water from e.g. dust. It is also known from the state of the art that the water tank is provided with a handle for disassembling the water tank from the coffee machine body in easy and convenient way manually by a customer. After disassembling the maintenance activities e.g. cleaning can be carry out by the user easily.
The patent application DE10 2004 004 822 A1 discloses a coffee machine comprising a housing and a water container which can be placed on the housing and which can be withdrawn therefrom. The water container comprises a cover which closes said water container and which can pivot about a rotational axis in such a manner that the cover can be opened and closed. The aim of the invention is to withdraw and transport said water container in an economical and reliable manner. As a result, a handle is arranged on the edge of the cover opposite the pivotable axis, and said handle being located inside the water container when the cover is in the closed state. The invention also relates to a water container.Presented solution do not provide the water tank which consist of easy demountable parts e.g. cover or handle. The more parts the final cost of the device is higher. Mounting time of such coffee machine also rises if the number of parts increases.
The patent KR 101 326 787 B1 discloses a water tank for a capsule extractor which comprises a water storage container and a cover. The water storage container has guide grooves formed from top to bottom on the lateral surfaces or both front and back surfaces thereof and protrusions at the upper side of the guide grooves. The cover has protruding pieces extended to the bottom on the lateral surfaces or both front and back surfaces and elongated grooves extended from top to bottom on the protruding pieces.
The patent application EP 2 721 975 A1 discloses the beverage preparation machine which has hinged lid which is removably provided in water tank, for opening and closing of the water tank. The lid is connected to water tank via arc-shaped guide element. The lid is rotatable around rotational axis and is secured along guiding grooves in water tank. EP 2 721 975 A1 discloses the features of the preamble of claim 1. It is the object of the present invention to improve a tank for a beverage preparation device according to the invention. This improvement makes the use of the device easier and more comfortable for the consumer.

This object is solved by a coffee machine water tank with the features of claim 1, having handle and cover system whereby the bifunctional element has at least one function part which is an integrated, elastic portion of the bifunctional element for unlocking and removing said bifunctional element from the water tank and the water tank has at least one opening through which the function part is pressed for releasing the bifunctional element.
A coffee machine is a device designed for performing brewing process. The coffee machine is equipped with a detachable water tank. The water tank is a considerable volume container and therefore it can contain other parts like water level sensors, floaters, valves, etc. The water tank is made out of plastic. Preferably, the water tank is made out of semi-translucent material to allow the consumer to observe if the water level is approaching to the minimum level below of which the brewing process cannot be performed. The water tank is provided with a cover and a handle.
The cover of the water tank is made out of plastic with shape matching the shape of the tank. The cover is detachably connected to the water tank. The main feature of the water tank cover is to prevent dust and other dirt from getting into the water.

The handle can be an element made out of plastic or other material which features allow the consumer to safely lift and move the water tank filled out with clear water indispensable to carry out the brewing process.
The bifunctional element is a cover and a handle so it has two different functions which depends on a position of said bifunctional element. The shape of the bifunctional element allows to use it in two ways. When the bifunctional element is in a horizontal position it acts as the cover to the water tank. When the bifunctional element is in a vertical position it can be used as a handle for carrying the water tank from the coffee machine for performing cleaning activities. The main advantage of such solution is that there is no need to provide any additional element e.g. handle to the brewing device. It also leads to reduction of the mounting time and production costs.
The function part is an elastic portion of the bifunctional element connected with said bifunctional element permanently and constitute one integral part. The function part can be also produced as a separate part connected detachably to the bifunctional element. The coffee machine bifunctional element can be equipped with plurality of such function parts. Preferably there is one function part for releasing the bifunctional element from the water tank.
The water tank has at least one opening form releasing a function part. The water tank is provided with at least one opening at the top of the rear wall of the water tank body through which the consumer can easy press the function part by finger and release the bifunctional element from the water tank.
The function part can be produced as an additional element detachably connected to the bifunctional element. Preferably the bifunctional element and the function element constitute one plastic part. The shape of the function element is designed to provide a flexibility great enough for deflecting the function element in order to release the bifunctional element from the water tank.
It is to be understood that both the foregoing general description and the following detailed description are exemplary, and are intended to provide further explanation of the invention as claimed. Other advantages and features of the invention will be apparent from the following description, drawings and claims.

In a preferred embodiment of the invention the shape of the sliding groove is opened to easy release the bifunctional element from the water tank. The sliding groove is placed on the bottom side of the bifunctional element and it cooperates with the hinge geometry on the water tank body. The shape of the sliding groove provides not only certain, desired movement of the bifunctional element but also possibility of disassembling the bifunctional element from the water tank body. The movement of the bifunctional element is provided manually by the user from a closed horizontal position to the opened vertical position on which the water tank can be lifted in order to perform cleaning activities or filing the water tank straight from the tap.
In the preferred embodiment of the invention the bifunctional element has at least one guiding rib. The bottom side of the bifunctional element is equipped with plurality of guiding ribs. The purpose of said guiding ribs is to lead the bifunctional element into closed position without additional force, only using the gravity effect.
In another embodiment of the invention the water tank has at least one guiding groove. The guiding grooves are placed on the rear wall of the water tank body. A cooperating protrusions are positioned on the body of the coffee machine. The aim of the guiding grooves and cooperating protrusions is to facilitate the assembling and disassembling process. The water tank can be displaced manually thanks to the recess of the bifunctional element.

The present invention provides a simple and cheap bifunctional element which act in horizontal position as a cover for a water tank and in vertical position as a handle for the water tank. The bifunctional element is easy detachable from the water tank thanks to elastic function part in order to perform maintenance activities by the user in easy and fast way.
The features of the invention believed to be novel are set forth with particularity in the appended claims. The invention itself, however, may be best understood by reference to the following detailed description of the invention, which describes an exemplary embodiment of the invention, taken in conjunction with the accompanying drawings. Further benefits and advantages of the present invention will become apparent after a careful reading of the detailed description with appropriate reference to the accompanying drawings.
In the drawings:
- Fig. 1: exemplary shows a coffee machine isometric view;
- Fig. 2: shows a rear side of a water tank;
- Fig. 3: shows a hinge geometry of the water tank;
- Fig. 4: shows a bottom side of a bifunctional element with a sliding groove;
- Fig. 5: shows the water tank with the bifunctional element in open position;

In cooperation with attached drawings, the technical contents and detailed description of the present invention are described thereinafter according to a preferable embodiment, being not used to limit its executing scope. Any equivalent variation and modification made according to appended claims is all covered by the claims claimed by the present invention.
In the following description of the preferred embodiments of the present invention, similar identical reference numbers designate identical or comparable components.
Coffee machines have a body comprising a coffee grinder, a removable water reservoir, a pump, a brewing unit, a heater, a steam relief unit, a milk frothing unit and a coffee outlet together with sensors and valves to automate the brewing process. Such coffee machines can have also a drainage system for waste water and other fluids disposal.
Clear, cold water from the water reservoir is delivered by the pump to the heater which heats the water to the desirable brewing temperature. Then the hot water is forcing by the pressure to go through ground coffee beans and flows through the coffee outlet to the cup. The steam generated during brewing process is released by the steam relief unit to a drip tray.

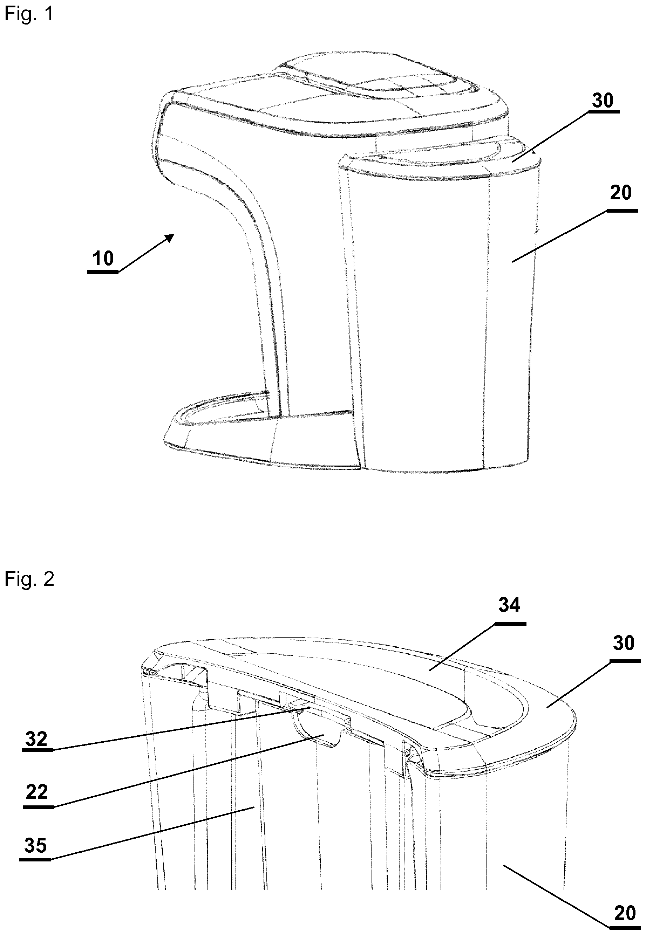

Fig. 1 shows an isometric view of a coffee machine 10 with a water tank 20 which is detachably connected to the main body of the coffee machine 10. A bifunctional element 30 is attached to the water tank 20 and the shape of the bifunctional element 30 match the shape of the water tank 20 to provide tight connection between this two parts and prevent the dust from getting inside the water tank 20.
Furthermore, the coffee machine 10 consist of many elements like a pump, a brewing unit, a heater, a steam relief unit, a milk frothing unit, a coffee outlet, sensors, valves etc. which are not shown on the figure but existence of which is necessary to carry out the brewing process.
Fig. 2 shows a rear side of a water tank 20 being demounted from the coffee machine 10 body. The bifunctional element 30 as shown on the figure is in a closed position and covers the water tank 20. The water tank 20 is covered by the bifunctional element 30 to protect water inside the water tank 20 from different kind of contamination from the environment and also to restrain the water evaporation. The bifunctional element 30 is equipped with the function part 32. The function part 32 is a great flexibility part which is fixed with the bifunctional element 30 permanently. The function part 32 is visible and accessible for the user only from the rear side of the water tank 20 and the manipulation of this part is possible also only from the rear side of the water tank 20. The water tank 20 is provided with an opening 22 by which the user can reach the function part 32. To release the bifunctional element 30 from the water tank 20 the user needs to press the function part 32 upwards and then the bifunctional element 30 can be released from the water tank 20 in easy and convenient way.
The bifunctional element 30 is provided with a recess 34 for a human hand for displace the water tank 20 from the coffee machine manually to perform maintenance activities. The movement of the water tank is possible when the bifunctional element 30 is in opened, vertical position.

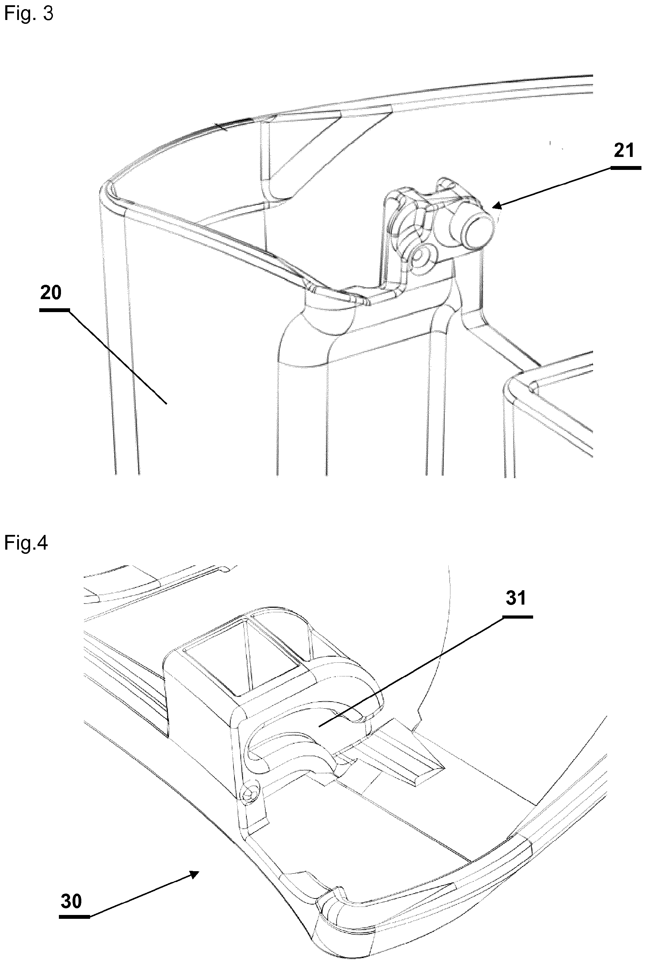

Fig. 3 shows a hinge geometry 21 of the water tank. The water tank 20 rear wall is provided with protrusions with the hinge geometry 21. The hinge geometry 21 of the water tank 20 cooperates with the sliding groove 31 of the bifunctional element. The protrusion and the hinge geometry 21 is made out the same material as the material of the water tank 20 body.
Fig. 4 shows a bottom side of a bifunctional element 30 with a sliding groove 31. The bottom side of the bifunctional element 30 is provided with the sliding groove 31 made as one part from the same material. The sliding groove 31 is a curved groove for receiving the hinge geometry 21 and the cooperation of this two elements provides the movement of the bifunctional element 30. The movement between opened and closed position is operated manually. Moreover, the groove of the sliding groove 31 is designed with one end opened which aim is to give the bifunctional element 30 the possibility to be detached from the water tank 20 in simple and easy way manually by the customer.

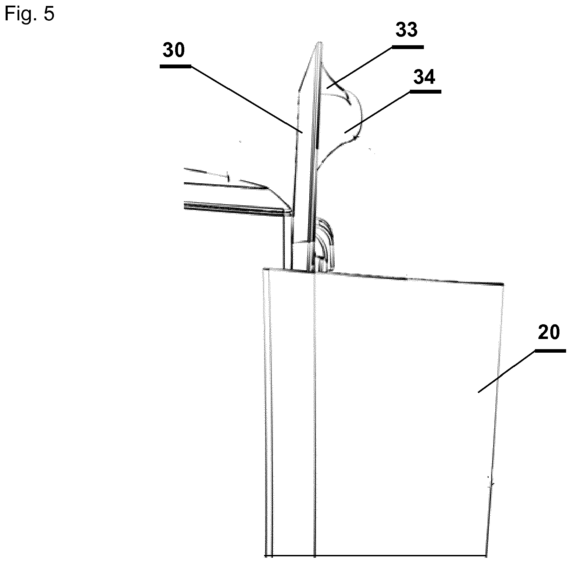

Fig. 5 shows a water tank 20 with a bifunctional element 30 in open position. The bifunctional element has a recess 34 designed in such a way that a human hand can be placed inside the recess 34 and the bifunctional element 30 can serve as a handle for safe lifting the water tank 20 by the consumer. The open position means that the bifunctional element 30 is in vertical position in which it acts as the water tank 20 handle.
The body of the water tank 20 has two guiding grooves 35 which are not shown on the figures. The guiding grooves 35 are placed on the rear wall of the water tank 20 perpendicularly to the bottom of the coffee machine 10. The body of the coffee machine 10 is equipped with small protrusions not shown on the figure which corresponds with the guiding grooves 35 placed on the water tank 20, therefore positioning of the water tank 20 on the coffee machine can be performed in a fast and intuitive manner.
At the bottom side of the bifunctional element 30 there are two guiding ribs 33 which after releasing of the bifunctional element 30 help to locate the bifunctional element 30 in the closed position in which the bifunctional element 30 is a cover of the water tank 20. The shape of the guiding ribs 33 is created in such a way that helps closing the water tank 20 by the bifunctional element 30 thanks to the weight of the element itself and the gravity.

The present invention provides a simple and cheap bifunctional element which act in horizontal position as a cover for a water tank and in vertical position as a handle for the water tank. The bifunctional element is easy detachable from the water tank thanks to elastic function part in order to perform maintenance activities by the user in easy and fast way.

### LIST OF REFERENCE SIGNS

- 10: coffee machine

- 20: water tank
- 21: hinge geometry
- 22: opening

- 30: bifunctional element
- 31: sliding groove
- 32: function part
- 33: guiding rib
- 34: recess
- 35: guiding groove

## Claims

1. A water tank (20) for a coffee machine (10) equipped with a bifunctional element (30) which movement is provided by a hinge geometry (21) on the water tank (20) and a cooperating sliding groove (31) on the bifunctional element (30), wherein the bifunctional element (30) in a first position is a cover for the water tank (20) and in a second position a carrying handle for the water tank (20) **characterized in that** the bifunctional element (30) has at least one function part (32) which is an integrated, elastic portion of the bifunctional element (30) for unlocking and removing said bifunctional element (30) from the water tank (20) and the water tank has at least one opening (22) through which the function part (32) is to be pressed for releasing the bifunctional element (30).

2. The water tank (20) according to any of preceding claims, **characterized in that** the shape of the sliding groove (31) is opened to easy release the bifunctional element (30) from the water tank (20).

3. The water tank (20) according to claim 1, **characterized in that** the bifunctional element (30) has at least one guiding rib (33).

4. The water tank (20) according to any of preceding claims, **characterized in that** the water tank (20) has at least one guiding groove (35).

## Patentansprüche

1. Wassertank (20) für eine Kaffeemaschine (10) mit einem Doppelfunktionselement (30), dessen Bewegung durch eine Gelenkgeometrie (21) an dem Wassertank (20) und eine damit zusammenwirkende Gleitrille (31) an dem Doppelfunktionselement (30) ermöglicht wird, wobei das Doppelfunktionselement (30) in einer ersten Position ein Deckel für den Wassertank (20) und in einer zweiten Position ein Tragegriff für den Wassertank (20) ist, **dadurch gekennzeichnet, dass** das Doppelfunktionselement (30) mindestens einen Funktionsteil (32) aufweist, bei dem es sich um einen integrierten, elastischen Abschnitt des Doppelfunktionselements (30) zum Entriegeln und Abnehmen des Doppelfunktionselements (30) von dem Wassertank (20) handelt, und der Wassertank mindestens eine Öffnung (22) aufweist, durch die hindurch der Funktionsteil (32) zum Lösen des Doppelfunktionselements (30) gedrückt werden soll.

2. Wassertank (20) nach einem der vorhergehenden Ansprüche, **dadurch gekennzeichnet, dass** die Form der Gleitrille (31) offen ist, so dass sich das Doppelfunktionselement (30) leicht vom Wassertank (20) lösen lässt.

3. Wassertank (20) nach Anspruch 1, **dadurch gekennzeichnet, dass** das Doppelfunktionselement (30) mindestens eine Führungsrippe (33) aufweist.

4. Wassertank (20) nach einem der vorhergehenden Ansprüche, **dadurch gekennzeichnet, dass** der Wassertank (20) mindestens eine Führungsnut (35) aufweist.

## Revendications

1. Réservoir d'eau (20) pour une machine à café (10) équipé d'un élément bifonctionnel (30), dont le mouvement est fourni par une géométrie à charnière (21) sur le réservoir d'eau (20) et une rainure coulissante coopérante (31) sur l'élément bifonctionnel (30), dans lequel l'élément bifonctionnel (30) dans une première position est un couvercle pour le réservoir d'eau (20) et dans une seconde position, une poignée de transport pour le réservoir d'eau (20), **caractérisé en ce que** l'élément bifonctionnel (30) présente au moins une partie de fonction (32) qui est une partie intégrée, élastique de l'élément bifonctionnel (30) permettant de débloquer et d'enlever ledit élément bifonctionnel (30) du réservoir d'eau (20) et le réservoir d'eau présente au moins une ouverture (22) à travers laquelle la partie de fonction (32) doit être comprimée afin de libérer l'élément bifonctionnel (30).

2. Réservoir d'eau (20) selon l'une quelconque des revendications précédentes, **caractérisé en ce que** la forme de la rainure coulissante (31) est ouverte afin de permettre une libération facile de l'élément bifonctionnel (30) du réservoir d'eau (20).

3. Réservoir d'eau (20) selon la revendication 1, **caractérisé en ce que** l'élément bifonctionnel (30) présente au moins une nervure de guidage (33).

4. Réservoir d'eau (20) selon l'une quelconque des revendications précédentes, **caractérisé en ce que** le réservoir d'eau (20) présente au moins une rainure de guidage (35).
